# EUROPÄISCHE PATENTANMELDUNG

(11) **EP 1 300 597 A1**
(43) Veröffentlichungstag der Anmeldung: **09.04.2003**
(21) Anmeldenummer: 01127963.5
(22) Anmeldetag: 23.11.2001
(51) Int. Cl.: F16B 5/06

(54) **Vorrichtung und Verfahren zur Befestigung mindestens eines flexiblen Gewebes sowie Aufnahmeschiene für ein Füllprofil**

(30) Priorität: 04.10.2001 EP 01123780
(71) Anmelder: Esa Holding, Inc., Venice, Florida 34293 (US)
(72) Erfinder: Echtler, Sigmund, Venice, Florida 34293 (US)
(74) Vertreter: Schurack, Eduard F.

(57) **Zusammenfassung**

Die vorliegende Erfindung betrifft eine Vorrichtung zur Befestigung mindestens eines flexiblen Gewebes, mit einer Aufnahmeschiene (1); und einem verformbaren Füllprofil (2), wobei zur Befestigung des mindestens einen Gewebes das Füllprofil (2) und mindestens ein Geweberand (3) in die Aufnahmeschiene (1) derart einführbar ist, daß der mindestens eine Geweberand (3) zwischen dem verformbaren Füllprofil (2) und der Aufnahmeschiene angeordnet wird. Sie betrifft überdies ein korresponierendes Verfahren zur Befestigung mindestens eines flexiblen Gewebes und eine Aufnahmeschiene für ein Füllprofil.

## Beschreibung

Die vorliegende Erfindung betrifft eine Vorrichtung und ein Verfahren zur Befestigung mindestens eines flexiblen Gewebes, insbesondere dessen Ränder, zur Erzielung einer dauerhaften oder vorübergehenden Befestigung sowie eine Aufnahmeschiene für ein Füilprofil.

Wenn Aussenflächen, Gefahrenzonen oder räumliche Gebilde durch flexible Gewebe, beispielsweise Planen, gegen Witterung, gefährliche Substanzen, Luftverluste oder Naturwasser geschützt, gesichert, abgedeckt oder verkleidet werden müssen, so sind diese Gewebeelemente und deren Ränder entsprechend zu befestigen und gegebenenfalls abzudichten. Insbesondere bei temporär angeordneten flexiblen Geweben wäre es ein grosser Vorteil, wenn diese ohne jegliche Durchdringungen oder besondere Randausbildungen schnell und einfach montierbar sowie demontierbar sind. Eine allgemeine Befestigungsmethode besteht darin, flexible Gewebe bzw. deren Ränder mittels Leisten an festen Flächen oder Profilen anzuschrauben, wobei dies aber mit einer Durchdringung des flexiblen Gewebes in kurzen Abständen verbunden ist. Bei oftmaligen Montagen und Demontagen erfordert dies einen erheblichen Arbeitsaufwand und die Lochungen in dem flexiblen Gewebe müssen hierbei immer wieder exakt eingerichtet werden. Bei fixen Randabschlüssen besteht auch ein Nachteil darin, dass diese ohne mechanische Umrüstungen nicht einwandfrei nachjustierbar sind, sofern im Langzeiteinsatz bereits witterungsbedingte Dehnungen bei zugbelasteten Gewebekonstruktionen eingetreten sind.

Aufgabe der vorliegenden Erfindung ist es, eine Vorrichtung und ein Verfahren der eingangs genannten Art bereitzustellen, bei der bzw. bei dem sich Ränder mindestens eines flexiblen Gewebes ohne jegliche Randausbildung und ohne Befestigungslöcher zugfest an den dafür vorgesehenen Orten befestigen lassen.

Diese Aufgabe wird gelöst durch eine Vorrichtung mit den Merkmalen von Patentanspruch 1 und ein Verfahren mit den Merkmalen von Patentanspruch 7. Eine zur Anwendung bei der erfindungsgemäßen Vorrichtung und der erfindungsgemäßen Verfahren besonders geeignete Aufnahmeschiene ist in Patentanspruch 9 beansprucht.

Unter flexiblen Geweben sind im Sinne der Erfindung flexible, im wesentlichen zweidimensionale Strukturen zu verstehen, beispielsweise Planen, Gittergewebe, Stoffe, Leinen, Matten, Folien, Gitterplanen, Gitterfolien und Bändchenfolien.

Bei der erfindungsgemäßen Lösung dient eine Schiene, vorzugsweise mit U-förmigem Querschnitt, als Aufnahme für einen oder für mehrere Ränder von flexiblen Geweben. Diese Aufnahmeschiene kann je nach konstruktiver Anforderung dauerhaft im Boden eingelassen und verankert aber auch übererdig an räumlichen Gebilden in allen geometrischen Richtungen fixiert werden. Möglich ist auch eine freie Auflage am Boden, um als einfache Kupplung für mehrere flexible Gewebe zu dienen. Die eigentliche Befestigung des flexiblen Gewebes erfolgt sodann durch ein verformbares Füllprofil, welches zusammen mit einem oder mit mehreren Geweberändern in die Aufnahmeschiene eingepresst wird. Das Füllprofil kann von beliebigem Querschnitt sein, insbesondere rund, oval, quadratisch, sechseckig. Bei der Materialauswahl kommen beliebige plastische Stoffe in Betracht, beispielsweise Gummi, Kunststoffe, Stoffe etc. Das Füllprofil kann als Vollprofil ausgebildet sein, beispielsweise als Gummiwulst, kann jedoch auch als Hohlprofil, beispielsweise schlauch- oder röhrenförmig, ausgebildet werden. Im letztgenannten Fall kommt eine Füllung mit einem Füllmaterial in Betracht. Als Füllmaterial werden bevorzugt Stoffe mit hoher Dichte verwendet, beispielsweise Sand, Wasser, Kies und/oder Erde. Da insbesondere ein rundes Gummiprofil die Eigenschaft besitzt, ohne Druck wieder seine Herstellungsform einzunehmen, bewirkt und gewährleistet dieses Füllelement insbesondere in seiner veränderten bzw. gequetschen Form innerhalb der Aufnahmeschiene einen festen und dauerhaften Seitendruck auf das Gewebe, das auf den Innenseiten der beiden Schenkel der Schiene anliegt.

Bei Verwendung einer Plane kann hierdurch bereits in vollem Umfang eine Dichtigkeit erzielt werden. Soll darüberhinaus oder bei Verwendung andersartiger Gewebe, z.B. Gittergewebe, eine erhöhte Zugfestigkeit bei der Verbindung sichergestellt werden, so wird die Aufnahmeschiene so gedreht und angeordnet, dass die zugbelastete Gewebeseite an der Schenkelkante der Grundschiene markant umgelenkt wird. Unter markanter Umlenkung sind im Sinne der Erfindung insbesondere Richtungswechsel des Gewebes um mehr als 90° zu verstehen. Da die Zugrichtung des Gewebes somit nicht der Einbaurichtung des klemmenden Füllprofils entspricht, entsteht an der Schenkelkante durch die Gewebeumlenkung ein sehr großer Widerstand, der einem Hochheben des Füllprofils aus der Aufnahmeschiene entgegenwirkt.

Für besonders hohe Anforderungen an die Zugeigenschaften der Gewebebefestigung werden die beiden Innenseiten der Schenkel der Aufnahmeschiene ganz oben mit Wulsten ausgebildet, die als weitere funktionelle Bremse für das bereits eingedrückte Füllprofil wirken. Die einfache und schnelle Demontage der Verbindung erfolgt dadurch, daß das Füllprofil beginnend von einem Schienenende sowie entgegen der Einpressrichtung schräg aus der Aufnahmeschiene herausgezogen wird.

Bei einer bevorzugten Ausführungsform weist die Aufnahmeschiene mindestens einen Aussensteg auf, um eine untererdige Schienenbefestigung zu unterstützen oder zur Verwendung bei einer übererdigen Schienenmontage.

Die Erfindung läßt sich bevorzugt anwenden bei der Abdichtung einer Traglufthalle, beim Aufbau von Schutzvorrichtungen gegen Hurrikanes und Hochwasser.

### Die Erfindung

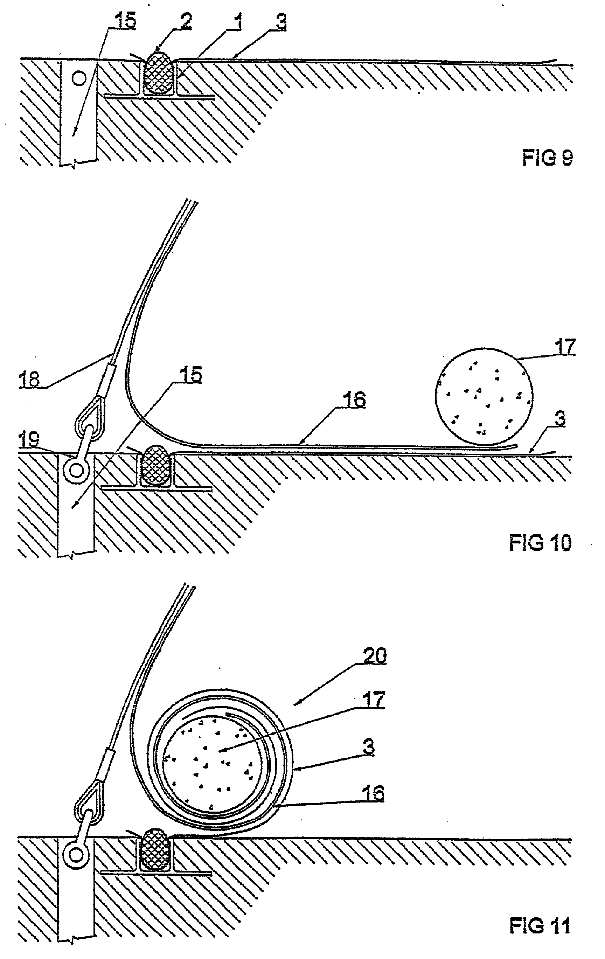

Ein Ausführungsbeispiel der Erfindung wird in den nachfolgenden Zeichnungen beispielhaft dargestellt. Hierbei zeigen
**Figur 1**
   den Schnitt einer im Boden eingelassenen Aufnahmeschiene mit einem frei aufliegenden Gewebe und einem rundem Füllprofil darüber;
**Figur 2**
   den Schnitt einer im Boden eingelassenen Aufnahmeschiene mit einem eingepressten Geweberand und dem Füllprofil, welches sich in seiner Profilform bereits angepasst hat;
**Figur 3**
   den Schnitt einer im Boden eingelassenen Aufnahmeschiene mit zwei eingepressten Geweberändern und dem Füllprofil;
**Figur 4**
   den Schnitt einer Gewebebefestigung bei einer stabilen Wand, wobei die Funktion der Dichtheit gefordert wird;
**Figur 5**
   den Schnitt einer zugbelasteten Gewebebefestigung an einer Baustruktur, wobei die Schenkel der Aufnahmeschiene innen mit Bremswulsten ausgebildet sind und die zugbeanspruchte Gewebeseite markant umgelenkt wird;
**Figur 6**
   den Schnitt einer Gewebebefestigung bei einer Traglufthalle, wobei die nach innen liegende zugfreie Abdichtschürze luftdicht mit der Aufnahmeschiene verbunden ist;
**Figur 7**
   die schematische Ansicht einer Traglufthalle mit einer äusseren Seilstruktur, bei welcher der innen liegende Geweberand mit Ballastsäcken zu einem Wulst eingerollt ist; und
**Figur 8**
   die Innenansicht einer Gewebebefestigung bei einer Traglufthalle mit äusserer Seilstruktur, wobei ein zugfreies Gewebeband mit der Aufnahmeschiene und dem Füllprofil verbunden ist, welches mit dem nach innen liegenden Hüllenrand und Ballastsäcken noch zu einem Wulst einzurollen ist.
**Figur 9**
   schematisch die Anordnung von Erdanker, Aufnahmeschiene, Füllprofil und Gewebeband als Vorbereitung für die anschließende Montage einer Traglufthalle;
**Figur 10**
   die Struktur von Figur 9 mit aufgeblasener Traglufthalle und vom Erdanker gehaltener Traglufthalle;
**Figur 11**
   die Struktur von Figur 10 mit fertig eingerolltem Abdichtwulst; und
**Figur 12**
   in vergrößerter Darstellung den Querschnitt durch ein besonders bevorzugtes Ausführungsbeispiel einer erfindungsgemäßen Aufnahmeschiene.

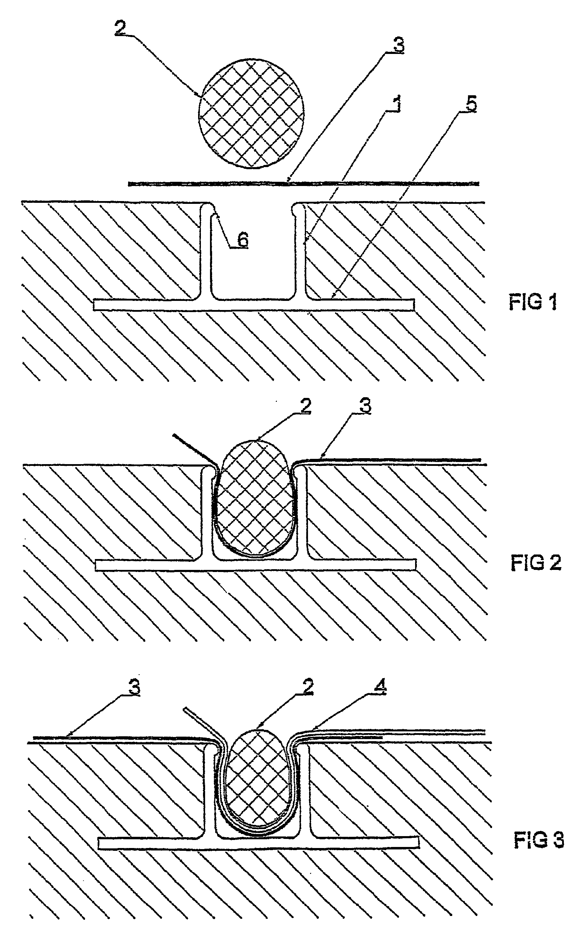

Figur 1 zeigt die Befestigung eines Geweberandes vor der eigentlichen Verbindung aller wesentlichen Bauteile: im Boden die eingelassene Aufnahmeschiene 1 mit Aussenstegen 5, welche für eine stabile Verankerung angeordnet sind, einen gerade aufliegenden Geweberand 3 und das runde Füllprofil 2 sowie den Wulst 6 als zusätzliche Zugsicherung des Füllprofil 2. In einer bevorzugten Ausführungsform besteht das Füllprofil aus Vollgummi mit im wesentlichen kreisförmigem Querschnitt. Der Durchmesser des Füllprofils beträgt, auch bei anderen Querschnitten, bevorzugt 10 bis 50 mm, noch bevorzugter 20 bis 40 mm.

Figur 2 zeigt die Gewebebefestigung mit dem eingepressten Füllprofil 2, welches sich bereits in der Form angepasst hat und dem nach aussen markant umgelenkten Geweberand 3.

Figur 3 zeigt eine Gewebebefestigung, bei der zwei Geweberänder 3 und 4 durch das Füllprofil 2 fixiert und zugbelastbar abgedichtet sind.

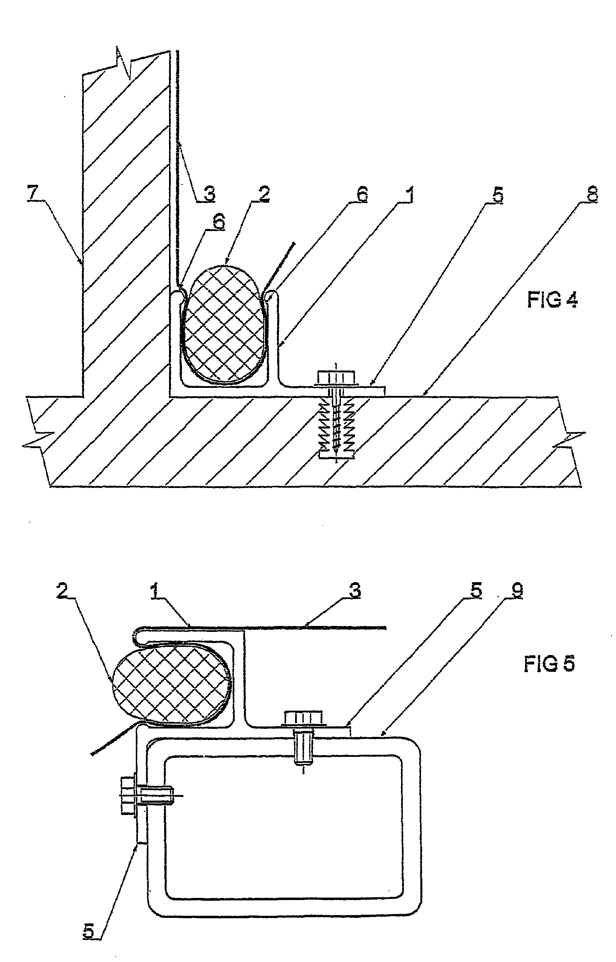

Figur 4 zeigt eine modifizierte Aufnahmeschiene 1 mit einem Sicherungswulst 6 seitlich an einer Mauer 7, welche über den einseitigen Aussensteg 5 an einer Bodenplatte 8 befestigt ist sowie den an der Mauer 7 anliegenden Geweberand 3 mit dem Füllprofil 2.

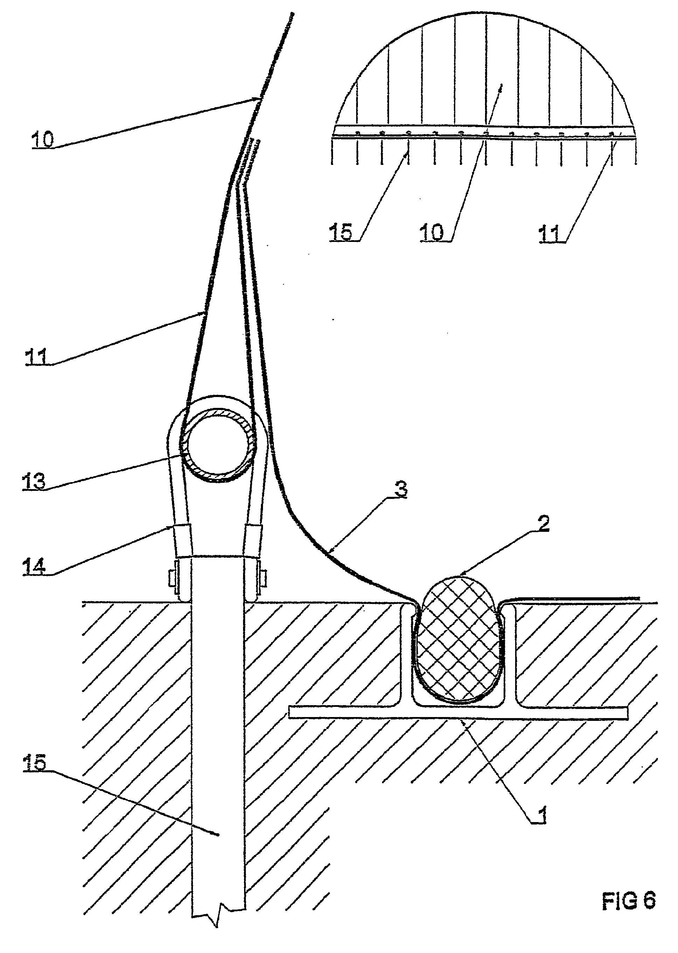

Figur 5 zeigt eine modifizierte Aufnahmeschiene 1, welche durch die Aussenstege 5 seitlich an einem Hohlprofil 9 befestigt ist, den eingespannten und markant umgelenkten Geweberand 3 und das Füllprofil 2.

Figur 6 zeigt in verkleinerter Darstellung zunächst eine Traglufthalle 10 und in detaillierter Darstellung den Randanschluss der Traglufthalle 10, bei welcher ein umlaufender Rohrrahmen 13 die Zugkräfte der Hülle 10 von der Planengewebeschlaufe 11 übernimmt und über Seile 14 und Erdanker 15 in den Baugrund einleitet. Der nach innen liegende kurze Geweberand 3, vorliegend eine sogenannte Abdichtschürze, welcher innerhalb der Traglufthalle frei am Boden aufliegt, wird durch die Aufnahmeschiene 1 und das Füllprofil 2 fixiert und abgedichtet.

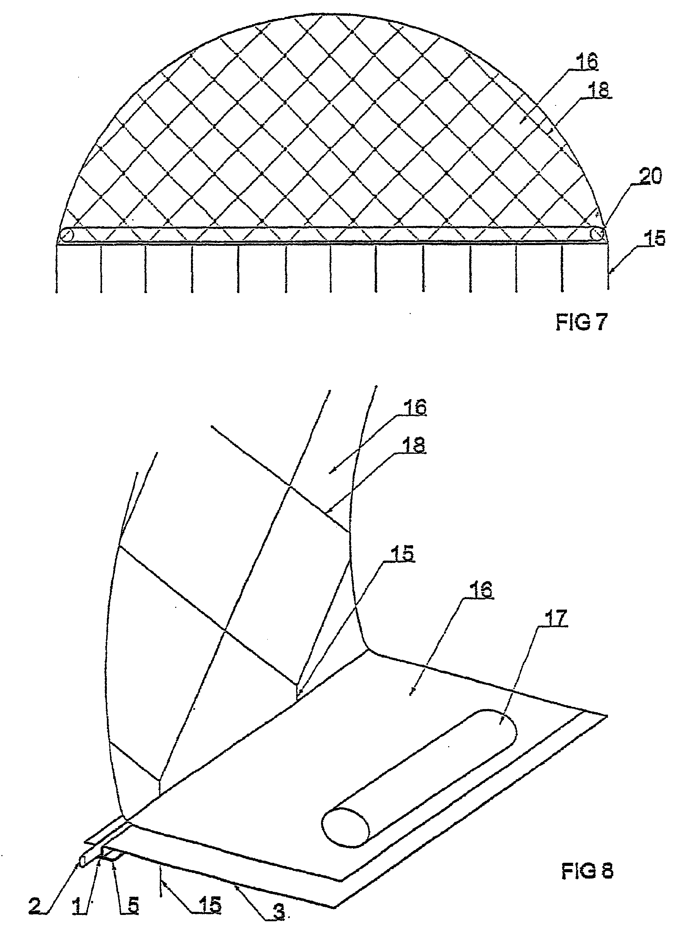

Figur 7 zeigt schematisch eine Traglufthalle mit einer Hülle 16 und der Seilstruktur 18, bei welcher die statischen Kräfte über Erdanker 15 in den Baugrund eingeleitet werden. Die Abdichtung erfolgt durch einen Wulst 20, bei dem der nach innen liegende Hüllenrand mit Abdichtungssäcken eingerollt wird.

Figur 8 zeigt die Hülle 16 mit der äußeren Seilstruktur 18, welche mit den Erdankern 15 verbunden ist. Die Aufnahmeschiene 1 mit seinen Aussenstegen 5 ist im Boden eingelassen. Das umlaufende Gewebeband 3 ist durch das Füllprofil 2 fixiert und abgedichtet. Auf dem nach innen liegenden Planengeweberand 16 der Hülle liegt ein Abdichtungssack 17, mit dem die beiden Ränder der Gewebe 3 und 16 gemeinsam hin zum Hallenrand eingerollt und nach aussen abgedichtet werden.

Figur 9 zeigt die Aufnahmeschiene 1 mit dem Gewebeband 3, dem Füllprofil 2 und dem Erdanker 15. Dies ist die Vorbereitung für die anschliessende Montage einer Traglufthalle mit äusserer Seilstruktur.

Figur 10 zeigt die bereits aufgeblasene Traglufthalle mit der Hülle 16, Seilstruktur 18, Schäkel 19 und dem Erdanker 15. Auf dem nach innen liegenden Hüllenrand 16 ist ein Abdichtungssack 17 aufgelegt. Darunter befindet sich das vormontierte Gewebeband 3.

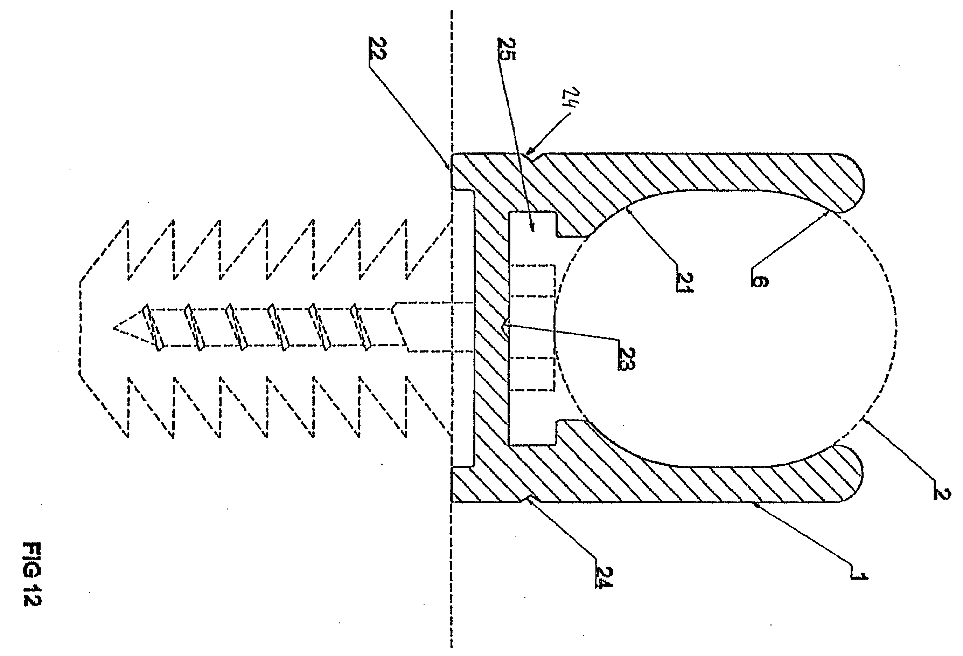

Figur 11 zeigt den fertig eingerollten Abdichtwulst 20 bestehend aus dem fixierten und abgedichteten Gewebeband 3, dem Hüllenrand 16 und dem inneren Abdichtungssack 17.

Figur 12 zeigt einen Querschnitt durch eine besonders bevorzugte Ausführungsform einer erfindungsgemäßen Aufnahmeschiene 1. Eine untere Stütze 21 an der Innenseite ist rund ausgebildet und stützt das Füllprofil 2, das gestrichelt eingezeichnet ist, von unten. Dadurch wird sichergestellt, daß das Füllprofil nicht in irgendwelche Hohlräume ausweichen kann, sondern in Idealform klemmt. Für andere Querschnitte des Füllprofils 2 sind daran angepaßte Ausbildungen der Stütze 21 bevorzugt. Die Aufnahmeschiene 1 weist zwei untere Stege 22 auf, die einen verbesserten Anschluß an unebene, wenig harte Flächen ermöglicht. Eine Zentrierrille 23 dient als Zentrierhilfe für das Bohren von Durchgangsöffnungen für die Befestigungsschrauben, wovon eine beispielhaft ebenfalls zur Verdeutlichung gestrichelt eingezeichnet ist. Damit wird bei bestimmten Anwendungen ein Verzicht auf die Aussenstege möglich. Die beiden Zentrierrillen 24 dienen ebenfalls als Bohrhilfen, um ein seitliches Befestigen von Bügeln, Flachprofilen und dergleichen zu ermöglichen, um damit, beispielsweise bei Anwendung im Zusammenhang mit einem Hurricanschutz, die Befestigung von Stützseilen zu erleichtern bzw. eine Sicherung gegen Abheben vor allem bei weichem Boden bereitzustellen. Stützseile werden bevorzugt zwischen zwei parallel angeordneten Aufnahmeschienen zu dem Zweck verwendet, das Gewebe zu unterstützen und die Zugbelastung auf die Klemmverbindung zwischen Aufnahmeschiene, Gewebe und Füllprofil zu reduzieren. Alternativ können Bohrungen im Bereich der Zentrierrillen 24 auch zur Kupplung mehrerer Aufnahmeschienen 1 miteinander verwendet werden. Ein Hohlraum 25, der bevorzugt im wesentlichen einen rechteckigen Querschnitt aufweist, dient beispielsweise dem Einschieben von Kupplungen aus Flachprofil, um mehrere Aufnahmeschienen 1 miteinander zu kuppeln. Er eignet sich aber auch als Freiraum für die Köpfe von Befestigungsschrauben und Nieten und als Aufnahme für in die Aufnahmeschiene 1 fallenden Schmutz, damit ein Klemmen des Füllprofils 2 nicht behindert wird.

Die Aufnahmeschiene 1 ist bevorzugt aus Aluminium gefertigt.

## Patentansprüche

1. Vorrichtung zur Befestigung mindestens eines flexiblen Gewebes, **gekennzeichnet durch**
eine Aufnahmeschiene (1); und
ein verformbares Füllprofil (2), wobei zur Befestigung des mindestens einen Gewebes das Füllprofil (2) und mindestens ein Geweberand (3) in die Aufnahmeschiene (1) derart einführbar ist, daß der mindestens eine Geweberand (3) zwischen dem verformbaren Füllprofil (2) und der Aufnahmeschiene angeordnet wird.

2. Vorrichtung nach Anspruch 1, **dadurch gekennzeichnet, dass** das Füllprofil (2) temporär verformbar ist und nach einer Entfernung aus der Aufnahmeschiene (1) wieder seine Urform einnimmt.

3. Vorrichtung nach Anspruch 1, **dadurch gekennzeichnet, dass**
das Füllprofil (2) verformbar ist und die Form, die es nach Einführung in die Aufnahmeschiene innehat, dauerhaft beibehält.

4. Vorrichtung nach einem der vorhergehenden Ansprüche, **dadurch gekennzeichnet, dass** die Aufnahmeschiene (4) einen U-förmigen Querschnitt aufweist.

5. Vorrichtung nach einem der vorhergehenden Ansprüche, **dadurch gekennzeichnet, dass** die Aufnahmeschiene (1) zwei parallel verlaufende Schenkel aufweist und mindestens ein Schenkel der Aufnahmeschiene (1) an den Enden seiner Innenseite einen Wulst (6) aufweist, der ausgebildet ist, das Entfernen des Füllprofils (2) aus der Aufnahmeschiene (1) bei Zugbelastung des mindestens einen geklemmten Geweberandes (3) zu blockieren.

6. Vorrichtung nach einem der vorhergehenen Ansprüche, **dadurch gekennzeichnet, dass** die Aufnahmeschiene (1) einen oder mehrere Aussenstege (5) aufweist zur Unterstützung der untererdigen Schienenbefestigung oder zur Verwendung bei der übererdigen Schienenmontage.

7. Verfahren zur Befestigung mindestens eines flexiblen Gewebes, folgende Schritte aufweisend:
a) Bereitstellen einer Aufnahmeschiene (1);
b) Bereitstellen eines Füllprofils (2);
c) Anordnen mindestens eines Geweberandes (3) mindestens eines Gewebes zwischen der Aufnahmeschiene (1) und dem Füllprofil (2);
d) Einführen des mindestens einen Geweberandes (2) und des Füllprofils (2) in die Aufnahmeschiene (1).

8. Verfahren nach Anspruch 7, **gekennzeichnet durch** folgenden weiteren Schritt:
e) Einrollen des einseitig **durch** das Füllprofil (2) fixierten Geweberandes (3) zusammen mit einem nach innen liegenden Hüllenrand (16) einer Traglufthalle mit äusserer Seilstruktur (18) mittels Abdichtungsmaterial (17) zu einem Wulst (20).

9. Aufnahmeschiene für ein Füllprofil, mit einem Steg und zwei gegenüberliegend angeordneten und senkrecht sich vom Steg erstreckenden Schenkeln, wobei der Steg und die zwei Schenkel eine U-Form bilden, wobei jeder Schenkel einen Endbereich und einen Mittenbereich aufweist, **dadurch gekennzeichnet, dass** der Abstand der beiden Endbereiche voneinander geringer ist als der Abstand der beiden Mittenbereiche.
